# EUROPÄISCHE PATENTSCHRIFT

(11) **EP 0 906 452 B1**
(45) Veröffentlichungstag und Bekanntmachung des Hinweises auf die Patenterteilung: **04.10.2001**
(21) Anmeldenummer: 97924973.7
(22) Anmeldetag: 22.05.1997
(51) Int. Cl.: C21D 9/04, E01B 7/00

(54) **GLEISOBERBAUTEIL SOWIE VERFAHREN ZUR HERSTELLUNG EINES SOLCHEN**
PERMANENT WAY COMPONENT AND PROCESS FOR ITS PRODUCTION
COMPOSANT DE VOIE PERMANENTE ET SON PROCEDE DE PRODUCTION

(30) Priorität: 24.05.1996 DE 19621018
(43) Veröffentlichungstag der Anmeldung: 07.04.1999
(73) Patentinhaber: BWG Butzbacher Weichenbau Gesellschaft mbH & Co. KG, D-35510 Butzbach (DE)
(72) Erfinder: KAIS, Alfred, D-35423 Lich (DE); RATZ, Gerhard, D-35428 Langgöns (DE); KUNITZ, Walter, D-13745 Wildau (DE)
(74) Vertreter: Stoffregen, Hans-Herbert, Dr. Dipl.-Phys.
(86) Internationale Anmeldenummer: EP9702616
(87) Internationale Veröffentlichungsnummer: WO9745563

(56) Entgegenhaltungen:
- EP-A- 0 105 864
- EP-A- 0 602 728
- DD-A- 263 482
- DE-A- 2 722 631
- DE-B- 1 284 439

## Beschreibung

Die Erfindung bezieht sich auf ein Gleisoberbauteil in Form eines Herzstückblocks, der über einen Teil seiner Länge einen Schichtaufbau mit einem Basisabschnitt und einem mit diesem verbundenen unmittelbar von einem Schienenfahrzeug befahrenen aus hoch- oder höchstfestem, Martensit ausscheidenden Stahl bestehenden Kopfabschnitt aufweist.

Ferner bezieht sich die Erfindung auf ein Verfahren zur Herstellung eines Herzstückblocks durch Verbinden eines aus einem ersten Stahl bestehenden Basisabschnittes mit einem aus hoch- oder höchstfestem, Martensit ausscheidenden Stahl bestehenden Kopfabschnitt, die nach ihrem Zusammenfügen gemeinsam wärmebehandelt werden.

Aus der DE-AS 1 284 439 ist ein Herzstück mit blockartiger Herzstückspitze bekannt, bei der das Spitzenteil aus einem Material besteht, dessen Quetschgrenze größer als die Quetschgrenze des Materials ist, aus dem das Anschlußstück hergestellt ist. Spitzenteil und Anschlußstück sind dabei verschweißt, wobei die aus Spitzenteil und Anschlußstück einschließlich des Schweißstoßes bestehende Einheit ölvergütet werden kann. Die hierbei erzielbaren Festigkeiten von Spitzenteil und Anschlußstück liegen im Bereich zwischen 1.300 und 1.500 N/mm² bzw. 1050 und 1150 N/mm².

Um Spitzenteile gewünschter Festigkeit zu erzielen, müssen diese insgesamt aus einem Sonderstahl hergestellt werden, der relativ teuer ist. Ungeachtet dessen weisen entsprechende Herzstückspitzen nicht die gewünschte Festigkeit und Streckgrenze auf, um insbesondere für Hochgeschwindigkeitsstrecken eingesetzt zu werden, ohne daß eine häufige Materialüberprüfung erfolgen muß.

Aus der EP 0 105 864 A1 ist ein Herzstück bekannt, das aus einem aus Regelschienenstahl bestehenden Grundkörper und einem auf diesen durch Auftragsschweißung aufgetragenen Kopfabschnitt aus Martensit aushärtendem Stahl besteht. Nach dem Verbinden des Grundkörpers mit dem Kopfabschnitt erfolgt eine gemeinsame Wärmebehandlung, wobei aufgrund der verwendeten Materialien die Festigkeit des Kopfabschnitts erhöht, die des Regelschienenstahls jedoch herabgesetzt wird.

Aus der EP 0 602 728 A1 ist eine Schienenverbindung bekannt, die aus einem austenitischem Stahl besteht, der mit Bainitstahl verbunden ist. Nach dem Verbinden der verschiedenen Stahlarten erfolgt eine Wärmebehandlung nicht.

Der vorliegenden Erfindung liegt das Problem zugrunde, ein Gleisoberbauteil in Form eines Herzstückblocks der eingangs genannten Art sowie ein Verfahren zur Herstellung eines solchen so weiterzubilden, dass dieses kostengünstig hergestellt werden kann und eine hohe Festigkeit und Streckgrenze aufweist, die starken Beanspruchungen standhält. Dabei soll auch die Möglichkeit gegeben sein, dass die Abschnitte nicht zwingend miteinander verschweißt sein müssen.

Die Aufgabe wird in Bezug auf den Herzstückblock dadurch gelöst, dass der aus hoch- bzw. höchstfestem Stahl bestehende Kopfabschnitt ein den vorderen Spitzenbereich des Herzstückblockes bildender Einsatz in dem Basisabschnitt ist und der Einsatz mit dem Basisabschnitt als Einheit derart wärmebehandelt worden ist, dass der Kopfabschnitt eine Zugfestigkeit R_{M2} zwischen 1.700 und 2.200 N/mm² und/oder eine Streckgrenze R_{F2} zwischen 1.600 und 1.800 N/mm² aufweist und dass der Basisabschnitt (22, 28, 34) ein im vorderen Bereich des Herzstücks angeordneter Bainitblock aus legiertem Stahl ist.

Erfindungsgemäß wird ein Herzstückblock in Schichtbauweise vorgeschlagen, bei dem allein der stark befahrene Bereich am Anfang der Herzstückspitze, der einer besonders hohen Belastung ausgesetzt ist, die erforderliche Festigkeit und/oder Streckgrenze aufweist, wohingegen die übrigen Bereiche, die einerseits Träger- und Abstützfunktionen ausüben und andererseits schienenähnlichen Bedingungen unterliegen, aus einem kostengünstigen bainitischen Stahl bestehen können. Hierdurch ergibt sich insbesondere der Vorteil, daß bei der gemeinsamen Wärmebehandlung beide Materialien gleiche Materialeigenschaftsänderungen dahingehend erfahren, daß die Festigkeit verbessert und die Streckgrenze erhöht wird. Folglich treten die ansonsten bei der Verwendung unterschiedlicher Materialien häufig zu beobachtenden gegenläufigen Materialeigenschaftsänderungen nicht auf.

Insbesondere ist vorgesehen, daß der hoch- bzw. höchstfeste Stahl ein Martensit ausscheidender Nickel- oder Nickelchromstahl ist, der im Ausgangszustand lösungsgeglüht im Temperaturbereich zwischen 900 und 1.100° C mit anschließender Abschreckung auf Austenit vorliegen kann. Demgegenüber handelt es sich bei dem Basisabschnitt erwähntermaßen um einen bainitischen Stahl, der im gesteuert abgekühlten Walzzustand bzw. durch Wärmebehandlung im Temperaturbereich zwischen 800 und 950° C und anschließend gesteuerter Abkühlung vorliegt.

Der Basisabschnitt kann mit dem Kopfabschnitt nicht nur durch Schweißen, sondern auch durch Klemmung oder Schrumpfung verbunden werden. Sofern die Materialien durch Schweißen zusammengefügt werden sollen, ist insbesondere ein Schutzgasschweißverfahren, ein Elektronenstrahlschweißen oder ein Laserschweißen zu bevorzugen.

Ferner zeichnen sich die Materialien und deren Behandlung dadurch aus, daß der bainitische Stahl als der Basisabschnitt nach der gemeinsamen Wärmebehandlung eine Streckgrenze von in etwa 950 - 1.100 N/mm² und/oder eine Zugfestigkeit von etwa 1.300 - 1.600 N/mm² aufweist. Insbesondere ist die Wärmebehandlung derart durchzuführen, daß die Streckgrenze bei in etwa 1.050 N/mm² und die Zugfestigkeit bei in etwa 1.450 N/mm² liegt.

Die Materialeigenschaften des aus hochfestem Stahl bestehenden Kopfabschnitts sind dadurch gekennzeichnet, daß diese im Ausgangszustand eine Streckgrenze von in etwa 800 - 950 N/mm², insbesondere zwischen 850 und 900 N/mm² und/oder eine Festigkeit von in etwa 1.000 - 1.200 N/mm², insbesondere 1.100 N/mm² aufweist.

Demgegenüber weist der Basisabschnitt im Ausgangszustand eine Streckgrenze von in etwa 800 - 850 N/mm², insbesondere von in etwa 820 N/mm² und/oder eine Zugfestigkeit von in etwa 1.250 - 1.400 N/mm², insbesondere 1.300 N/mm² auf.

Ferner ist der bainitische Stahl als Basisabschnitt durch eine chemische Zusammensetzung mit in etwa 0,3 - 0,5 Gew.% C, 1 - 1,5 Gew.% Si, 0,5 - 1,5 Gew.% Mn, ungefähr 1 Gew.% Cr, 0,7 - 1,2 Gew.% Mo und gegebenenfalls V- und Ni-Anteilen gekennzeichnet.

Der aus hoch- bzw. höchstfestem Stahl bestehende Kopfabschnitt sollte eine chemische Zusammensetzung mit ≤ 0,03 Gew.% C, 18 Gew.% Ni, 5 Gew.% Mo, 10 Gew.% Co und 1 Gew.% Ti aufweisen.

Ein Verfahren zur Herstellung eines Herzstückblocks durch Verbinden eines aus einem ersten Stahl bestehenden Basisabschnitt mit einem aus hoch- oder höchstfestem Martensit ausscheidenden Stahl bestehenden Kopfabschnitt, die nach ihrem Zusammenfügen gemeinsam wärmebehandelt werden, zeichnet sich dadurch aus, dass als erster Stahl ein bainitischer legierter Stahl in Form eines den vorderen Bereich des Herzstückblocks bildenden Bainitblockes verwendet wird, der im Ausgangszustand im Walzzustand vorliegt, dass der aus hoch- bzw. höchstfestem Stahl bestehende Kopfabschnitt als Einsatz ausgebildet und sodann durch Schweißen, Schrumpfen oder Klemmverbindung mit dem Bainitblock verbunden wird und dass aus dem Bainitblock und dem Einsatz gebildete Einheit derart wärmebehandelt wird, dass der bainitische Stahl eine Streckgrenze R_{E1} mit 950 < R_{E1}< 1.100 N/mm² und/oder eine Zugfestigkeit R_{M1} mit 1.400 < R_{M1} < 1.500 N/mm² und der Martensit ausscheidende Stahl eine Streckgrenze R_{E2} mit 1.600 < R_{E2} < 1.800 N/mm² und eine Zugfestigkeit R_{M2} mit 1.800 < R_{M2} ≤ 2.200 N/mm² aufweist.

Insbesondere ist vorgesehen, daß die gemeinsame Wärmebehandlung, nachdem die Abschnitte vorzugsweise bei Raumtemperatur miteinander verbunden sind, bei einer Temperatur im Bereich zwischen 400 und 600° C über einen Zeitraum zwischen 1 und 7 Stunden einem Diffusionsglühen unterzogen werden, wodurch bei dem Martensit ausscheidenden Stahl eine Ausscheidungshärtung erfolgt, durch die die gewünschte Steigerung der mechanischen Eigenschaften hervorgerufen wird. Gleichzeitig erfolgt auch durch das Anlassen eine Steigerung der mechanischen Eigenschaften des bainitischen Stahls.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden bevorzugten Ausführungsbeispielen.

Es zeigen:
- Fig. 1: einen Schnitt durch ein Herzstück,
- Fig. 2: einen Längsschnitt durch die Herzstückspitze nach Fig. 1,
- Fig. 3: einen Schnitt durch eine weitere Ausführungsform eines Herzstückbereichs mit eingeschrumpfter Herzstückspitze,
- Fig. 4: einen Längsschnitt durch die Herzstückspitze nach der Ausführungsform gemäß Fig. 3,
- Fig. 5: eine Schnittdarstellung durch eine dritte Ausführungsform eines Herzstückbereichs mit geklemmter Herzstückspitze und
- Fig. 6: einen Längsschnitt durch die Herzstückspitze gemäß Fig. 5.

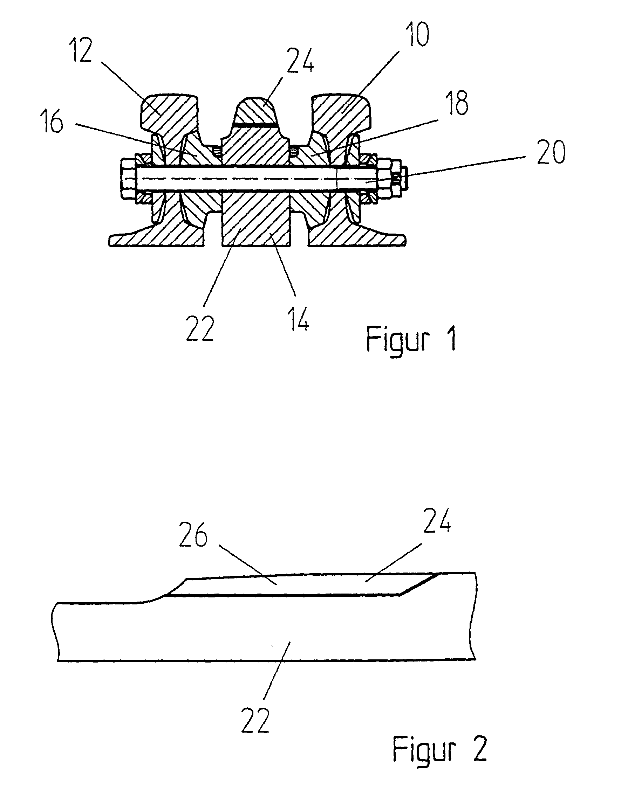

In Fig. 1 ist ein Schnitt durch eine Weiche im Bereich ihres Herzstücks dargestellt. So verläuft zwischen Flügelschienen 10 und 12 eine Herzstückspitze 14, die gegenüber den Flügelschienen 10 und 12 über Futterstücke 16 und 18 beabstandet und mit ersteren über einen Schraubbolzen 20 fest verbunden ist. Insoweit wird jedoch auf bekannte Konstruktionen verwiesen.

Erfindungsgemäß weist die Herzstückspitze 14 einen Schichtaufbau derart auf, daß auf einen Basisabschnitt 22 ein Kopfabschnitt 24 angeordnet ist, der im Ausführungsbeispiel nach den Fig. 1 und 2 mit dem Basisabschnitt 22 verschweißt ist. Als mögliche Schweißverfahren kommen dabei Schutzgasschweißverfahren, Elektronenstrahlschweißen oder Laserschweißen in Frage.

Wie insbesondere der Längsschnitt gemäß Fig. 2 verdeutlicht, erstreckt sich der Kopfabschnitt 24 im vorderen Bereich 26 der Herzstückspitze 14, also in dem Bereich, der normalerweise einem besonders hohen Verschleiß ausgesetzt ist.

Erfindungsgemäß besteht der Basisabschnitt 22 aus einem bainitischen Stahl und der Kopfabschnitt 26 aus einem hoch- bzw. höchstfestem Martensit ausscheidenden Stahl, wobei der Kopfabschnitt 24 nach dem Zusammenfügen mit dem Basisabschnitt 22 mit diesem gemeinsam wärmebehandelt wird.

Der Basisabschnitt 22, der aus bainitischem Stahl besteht, liegt im Ausgangszustand, also vor dem Zusammenfügen mit dem Kopfabschnitt 24 im Walzzustand vor. Ferner weist der bainitische Stahl vorzugsweise eine chemische Zusammensetzung mit 0,3 - 0,5 Gew.% C. 1 - 1.5 Gew.% Si, 0.5 - 1,5 Gew.% Mn, ungefähr 1 Gew.% Cr, 0.7 - 1.2 Gew.% Mo sowie Anteilen von V und Ni auf. Die mechanischen Eigenschaften des im Walzzustand vorliegenden bainitischen Stahls belaufen sich hinsichtlich der Streckgrenze R_{E1A} auf ungefähr 820 N/mm² und hinsichtlich der Zugfestigkeit R_{M1A} auf etwa 1.350 N/mm².

Der hoch- bzw. höchstfeste Martensit ausscheidende Stahl, der im Ausgangszustand bei einer Temperatur von 900 - 1.050° C lösungsgeglüht mit anschließender Abschreckung auf Austenit vorliegt, weist eine chemische Zusammensetzung von in etwa ≤ 0,03 Gew.% C. 18 Gew.% Ni, 5 Gew.% Mo, 10 Gew.% Co und 1 Gew.% Ti auf. Die mechanischen Eigenschaften sind hinsichtlich der Streckgrenze R_{E2A} mit 850 - 900 N/mm² und in bezug auf die Zugfestigkeit R_{M2A} mit in etwa 1.100 N/mm² anzugeben.

Nachdem der Kopfabschnitt 24 mit dem Basisabschnitt 22 verschweißt ist, erfolgt erwähntermaßen eine gemeinsame Wärmebehandlung zwischen 400 und 600° C, insbesondere zwischen 450 und 500° C über einen Zeitraum von 1 bis 7 Stunden, vorzugsweise 2 bis 6 Stunden, wodurch beim Martensit ausscheidenden Stahl durch Ausscheidungshärtung eine Steigerung der mechanischen Eigenschaften derart erfolgt, daß sich die Zugfestigkeit R_{M2} auf in etwa 1.800 - 2.200 N/mm² und die Streckgrenze R_{E2} auf in etwa 1.700 N/mm² erhöht.

Durch die gemeinsame Wärmebehandlung, durch sogenanntes Diffusionsglühen verändern sich die Materialeigenschaften des Basisabschnitts 22, der auch als Bainitblock bezeichnet werden kann, ebenfalls positiv dahingehend, daß die Streckgrenze R_{E1} auf in etwa 1.050 N/mm² und die Zugfestigkeit R_{M1} auf in etwa 1.450 N/mm² erhöht wird.

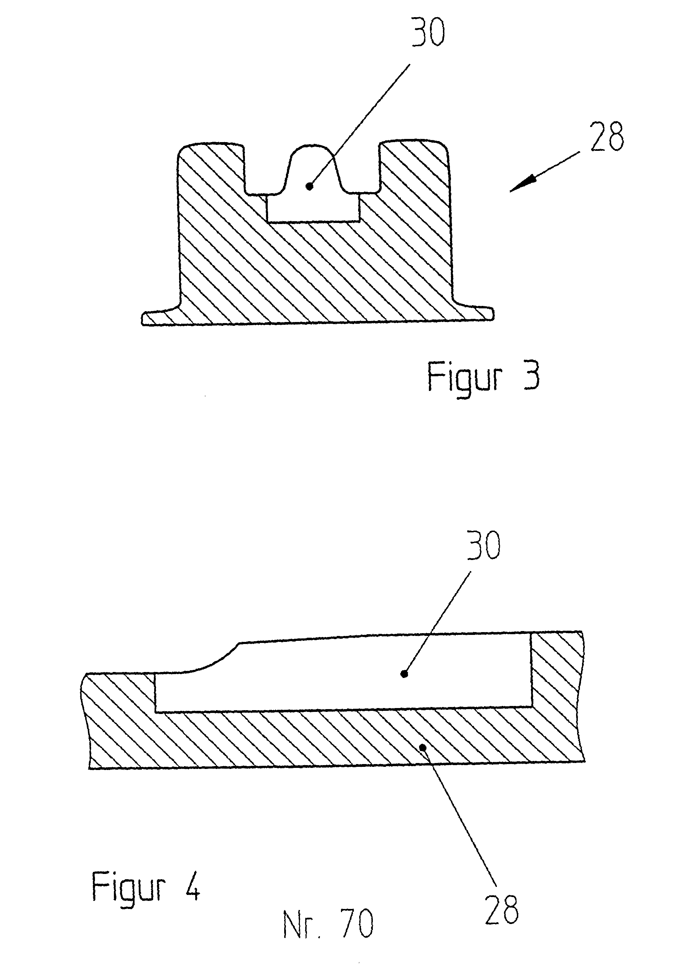

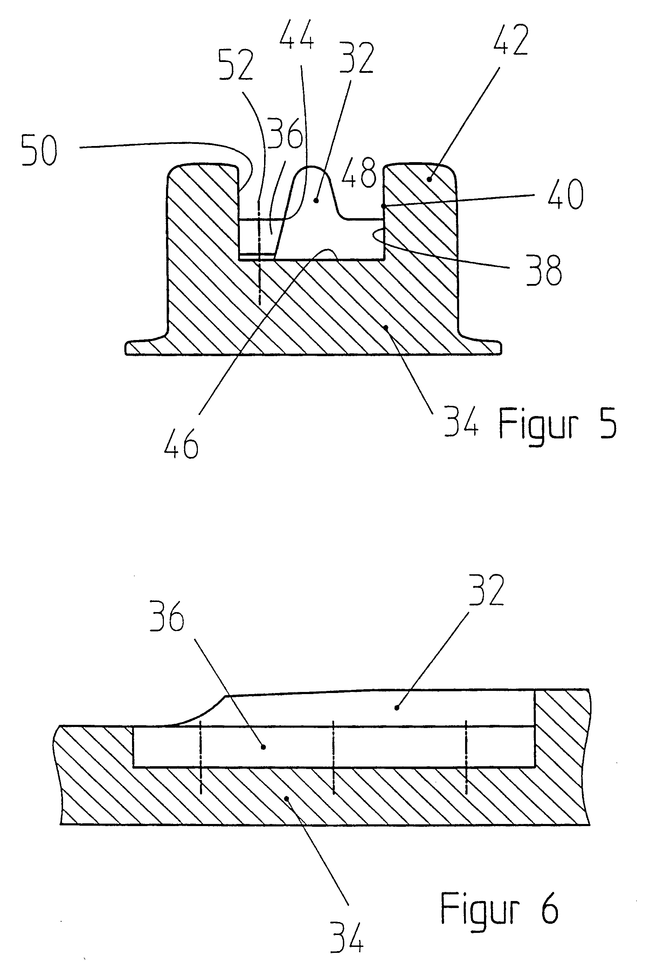

Wie die Fig. 3 - 6 verdeutlichen, ist es jedoch nicht erforderlich, daß die übereinander geschichteten Abschnitte vom Basisabschnitt und Kopfabschnitt durch Schweißen miteinander verbunden sind. Vielmehr ist nach dem Ausführungsbeispiel der Fig. 2 und 3 auch ein Einschrumpfen möglich. So ist in den Fig. 3 und 4 ein Herzstückblock 28 mit eingeschrumpfter Spitze 30 dargestellt, die aus hoch- bzw. höchstfestem Martensit ausscheidenden Stahl entsprechend dem Ausführungsbeispiel der Fig. 1 und 2 besteht. Insoweit wird auf die beschriebenen Materialeigenschaften verwiesen. Der Block 28 entspricht dem Basisabschnitt nach den Fig. 1 und 2 und besteht demzufolge aus bainitischem Stahl. Das Einschrumpfen des Spitzenbereichs 30 in den Block 28 erfolgt in gewohnter Technik. So können die Längs- und Seitenwandungen sowohl von dem Einsatz 30 als auch von dem Basisblock 28 leicht abgeschrägt sein. Bei erwärmten Block 28 gleitet sodann der Einsatz 30 in die Aussparung, um beim Abkühlen einen festen Schrumpfsitz zu erreichen.

Anstelle eines Einschrumpfens nach den Fig. 3 und 4 bzw. eines Verschweißens nach den Fig. 1 und 2 besteht auch die Möglichkeit, einen Einsatz 32 aus hoch- bzw. höchstfestem Stahl mechanisch in einem aus bainitischen Stahl bestehenden Block 34 durch zum Beispiel eine keilförmige Leiste 36 zu sichern. Hierzu liegt der den vorderen Bereich der Herzstückspitze bildenden und einem hohen Verschleiß ausgesetzte Abschnitt 32 mit einer seiner Längsseiten 38 plan an einer Begrenzungsfläche 40 eines von dem Block 34 gebildeten Flügelschienenabschnitts 42 an, wohingegen die gegenüberliegende Längsseite 44 des Einsatzes 32 schräg zum Boden 46 der in dem Block 34 vorhandenen Aufnahme für den Einsatz 32 derart verläuft, daß der Abstand zwischen der Längsseite 44 zur benachbarten Innenwandung 50 des Blocks 34 zum Boden 46 hin abnimmt. In dem so sich zum Boden hin verjüngenden Spalt 52 wird der Keil 36 eingebracht und mittels nicht näher bezeichneter Befestigungselemente zum Boden 46 hin angezogen, so daß eine Sicherung des Einsatzes 32 erfolgt.

Losgelöst von der gewählten Konstruktions- bzw. Befestigungsart besteht der Einsatz 32 erwähntermaßen aus hoch- bzw. höchstfestem Martensit ausscheidenden Stahl und der Block 34 aus bainitischem Stahl entsprechend der Ausführungsbeispiele der Fig. 1 - 4.

## Patentansprüche

1. Gleisoberbauteil in Form eines Herzstückblocks (14), der über einen Teil seiner Länge einen Schichtaufbau mit einem Basisabschnitt (22, 28, 34) und einem mit diesem verbundenen unmittelbar von einem Schienenfahrzeug befahrenen aus hoch- oder höchstfestem, Martensit ausscheidenden Stahl bestehenden Kopfabschnitt (24, 30, 32) aufweist, wobei der aus hoch- bzw. höchstfestem Stahl bestehende Kopfabschnitt (24, 30, 32) ein den vorderen Spitzenbereich des Herzstückblockes bildender Einsatz in dem Basisabschnitt ist und der Einsatz mit dem Basisabschnitt als Einheit derart wärmebehandelt worden ist, dass der Kopfabschnitt eine Zugfestigkeit R_{M2} zwischen 1.700 und 2.200 N/mm² und/oder eine Streckgrenze R_{F2} zwischen 1.600 und 1.800 N/mm² aufweist und wobei der Basisabschnitt (22, 28, 34) ein im vorderen Bereich des Herzstücks angeordneter Bainitblock aus legiertem Stahl ist.

2. Gleisoberbauteil nach Anspruch 1,
**dadurch gekennzeichnet,**
**daß** der hochfeste Stahl ein Martensit ausscheidender Nickel- oder Nickelchromstahl ist.

3. Gleisoberbauteil nach zumindest einem der vorhergehenden Ansprüche,
**dadurch gekennzeichnet,**
**daß** der Basisabschnitt (22, 28, 34) mit dem Kopfabschnitt (24, 30, 32) durch Klemmung, Schrumpfung oder durch Schweißen, insbesondere Schutzgasschweißen, Elektronenstrahlschweißen oder Laserschweißen verbunden ist.

4. Gleisoberbauteil nach zumindest einem der vorhergehenden Ansprüche,
**dadurch gekennzeichnet,**
**daß** der Kopfabschnitt (24, 30, 32) ein hochfester Stahl mit in etwa ≤ 0,03 Gew.% C, 18 Gew.% Ni, 5 Gew.% Mo, 10 Gew.% Co und 1 Gew.% Ti ist.

5. Gleisoberbauteil nach zumindest einem der vorhergehenden Ansprüche,
**dadurch gekennzeichnet,**
**daß** der Basisabschnitt (22, 28, 34) ein bainitischer Stahl mit in etwa 0,3 - 0,5 Gew.% C, 1 -1,5 Gew.% Si, 0,5 - 1,5 Gew.% Mn, ca. 1 Gew.% Cr, 0,7 - 1,2 Gew.% Mo und gegebenenfalls V- und Ni-Anteilen ist.

6. Gleisoberbauteil nach zumindest einem der vorhergehenden Ansprüche,
**dadurch gekennzeichnet,**
**daß** der Basisabschnitt (22, 28, 34) nach der gemeinsamen Wärmebehandlung eine Streckgrenze R_{E1} von in etwa 950 - 1.100 N/mm² und/oder eine Zugfestigkeit R_{M1} von in etwa 1.300 - 1.600 N/mm² aufweisen.

7. Gleisoberbauteil nach zumindest einem der vorhergehenden Ansprüche,
**dadurch gekennzeichnet,**
**daß** der Kopfabschnitt (24, 30, 32) im Ausgangszustand lösungsgeglüht bei in etwa 900 - 1.050° C mit anschließender Abschreckung auf Austenit vorliegt und eine Streckgrenze R_{E2a} von in etwa 800 - 900 N/mm² und/oder eine Festigkeit R_{M2A} von in etwa 1.000 - 1.200 N/mm² aufweist.

8. Gleisoberbauteil nach zumindest einem der vorhergehenden Ansprüche,
**dadurch gekennzeichnet,**
**daß** der aus bainitischem Stahl bestehende Basisabschnitt (22, 28, 34) im Ausgangszustand im Walzzustand vorliegt und eine Streckgrenze R_{E1A} von in etwa 800 - 850 N/mm² und/oder eine Zugfestigkeit R_{M1a} von in etwa 1.100 - 1.400 N/mm² aufweist.

9. Verfahren zur Herstellung eines Herzstückblocks durch Verbinden eines aus einem ersten Stahl bestehenden Basisabschnittes mit einem aus hoch- oder höchstfestem, Martensit ausscheidenden Stahl bestehenden Kopfabschnitt, die nach ihrem Zusammenfügen gemeinsam wärmebehandelt werden, wobei als erster Stahl ein bainitischer legierter Stahl in Form eines den vorderen Bereich des Herzstückblocks bildenden Bainitblockes verwendet wird, der im Ausgangszustand im Walzzustand vorliegt, wobei der aus hoch- bzw. höchstfestem Stahl bestehende Kopfabschnitt als Einsatz ausgebildet und sodann durch Schweißen, Schrumpfen oder Klemmverbindung mit dem Bainitblock verbunden wird und wobei aus dem Bainitblock und dem Einsatz gebildete Einheit derart wärmebehandelt wird, dass der bainitische Stahl eine Streckgrenze R_{E1} mit 950 < R_{E1}< 1.100 N/mm² und/oder eine Zugfestigkeit R_{M1} mit 1.400 < R_{M1} < 1.500 N/mm² und der Martensit ausscheidende Stahl eine Streckgrenze R_{E2} mit 1.600 < R_{E2} < 1.800 N/mm² und eine Zugfestigkeit R_{M2} mit 1.800 < R_{M2} ≤ 2.200 N/mm² aufweist.

10. Verfahren nach Anspruch 9,
**dadurch gekennzeichnet,**
**dass** als Kopfabschnitt ein Martensit ausscheidender Stahl benutzt wird, der im Ausgangszustand lösungsgeglüht bei einer Temperatur zwischen 900 und 1.000° C vorliegt und sodann auf Austenittemperatur abgeschreckt wird.

11. Verfahren nach zumindest einem der Ansprüche 9 oder 10,
**dadurch gekennzeichnet,**
**dass** der mit dem Kopfabschnitt verbundene Basisabschnitt bei einer Temperatur von in etwa 400 - 600° C über einen Zeitraum zwischen 1 und 7 Stunden, vorzugsweise 1 und 5 Stunden diffusionsgeglüht wird.

## Claims

1. Permanent way component in the form of a cross-frog block (14) which has a layer construction over part of its length, with a base portion (22, 28, 34) and a top portion (24, 30, 32) connected thereto which is passed directly by a rail vehicle and consists of high-strength or super high-strength martensite-forming steel, the top portion (24, 30, 32) consisting of high-strength or super high-strength steel being an insert forming the leading nose region of the cross-frog block in the base portion and the insert with the base portion having been heat-treated as a unit in such a way that the top portion has a tensile strength R_{M2} between 1,700 and 2,200 N/mm² and/or a yield point R_{F2} between 1,600 and 1,800 N/mm², and the base portion (22, 28, 34) being a bainite block made of alloyed steel arranged in the leading region of the cross-frog.

2. Permanent way component according to claim 1, **characterised in that** the high-strength steel is a martensite-forming nickel or nickel chromium steel.

3. Permanent way component according to at least one of the preceding claims, **characterised in that** the base portion (22, 28, 34) is connected to the top portion (24, 30, 32) by clamping, shrinking or by welding, in particular shielded arc welding, electron beam welding or laser welding.

4. Permanent way component according to at least one of the preceding claims, **characterised in that** the top portion (24, 30, 32) is a high-strength steel with approximately ≤ 0.03 wt.% C, 18 wt.% Ni, 5 wt.% Mo, 10 wt.% Co and 1 wt.% Ti.

5. Permanent way component according to at least one of the preceding claims, **characterised in that** the base portion (22, 28, 34) is a bainitic steel with approximately 0.3 to 0.5 wt.% C, 1 to 1.5 wt.% Si, 0.5 to 1.5 wt.% Mn, approximately 1 wt.% Cr, 0.7 to 1.2 wt.% Mo and optionally V and Ni fractions.

6. Permanent way component according to at least one of the preceding claims, **characterised in that** after the common heat treatment, the base portion (22, 28, 34) has a yield point R_{E1} of approximately 950 to 1,100 N/mm² and/or a tensile strength R_{M1} of approximately 1,300 to 1,600 N/mm².

7. Permanent way component according to at least one of the preceding claims, **characterised in that** in the initial state the top portion (24, 30, 32) is solution annealed at approximately 900 to 1,050°C with subsequent quenching on austenite and has yield point R_{E2a} of approximately 800 to 900 N/mm² and/or a strength R_{M2A} of approximately 1,000 to 1,200 N/mm².

8. Permanent way component according to at least one of the preceding claims, **characterised in that** in the initial state the base portion (22, 28, 34) consisting of bainitic steel is in the as-rolled condition and has a yield point R_{E1A} of approximately 800 to 850 N/mm² and/or a tensile strength R_{M1a} of approximately 1,100 to 1,400 N/mm².

9. Process for producing a cross-frog block by connecting a base portion consisting of a first steel to a top portion consisting of high-strength or super high-strength martensite-forming steel which portions are jointly heat-treated after being joined together, a bainitic alloyed steel in the form of a bainite block forming the leading region of the cross-frog block being used as a first steel which in the initial state is in the as-rolled condition, the top portion consisting of high-strength or super high-strength steel being formed as an insert and then being connected by welding, shrinking or clamping to the bainite block, the unit formed by the bainite block and the insert being heat-treated in such a way that the bainitic steel has a yield point R_{E1} of 950 < R_{E1} < 1,100 N/mm² and/or a tensile strength R_{M1} of 1,400 < R_{M1} < 1,500 N/mm² and the martensite-forming steel has a yield point R_{E2} of 1,600 < R_{E2} < 1,800 N/mm² and a tensile strength R_{M2} of 1,800 < R_{M2} < 2,200 N/mm².

10. Process according to claim 9, **characterised in that** a martensite-forming steel is used as top portion, which steel is solution annealed in the initial state at a temperature between 900 and 1,000°C and is then quenched to austenite temperature.

11. Process according to at least one of. claims 9 or 10, **characterised in that** the base portion connected to the top portion is homogenised at a temperature of approximately 400 to 600°C over a period between 1 and 7 hours, preferably 1 and 5 hours.

## Revendications

1. Composant de voie permanente sous la forme d'un bloc de coeur (14), ayant sur une partie de sa longueur une construction en couches formée d'un segment de base (22, 28, 34) et d'un segment de tête (24, 30, 32), relié à celui-ci directement au contact d'un véhicule ferroviaire et qui est réalisé en un acier martensitique résistant ou très résistant, le segment de tête (24, 30, 32) en acier résistant ou très résistant étant dans le segment de base un insert qui constitue la zone de la pointe avant du bloc de coeur, et l'insert a été traité thermiquement comme un tout avec le segment de base, de sorte que le segment de tête a une résistance à la traction (R_{M2}) comprise 1 700 et 2 200 N/mm² et/ou une limite d'allongement (R_{F2}) comprise entre 1 600 et 1 800 N/mm², et le segment de base (22, 28, 34) est un bloc de bainite en acier allié, prévu dans la zone avant du coeur.

2. Composant de voie permanente selon la revendication 1,
**caractérisé en ce que**
l'acier très résistant est un acier au nickel ou au nickel-chrome donnant de la martensite.

3. Composant de voie permanente selon au moins l'une des revendications précédentes,
**caractérisé en ce que**
le segment de base (22, 28, 34) est relié au segment de tête (24, 30, 32) par serrage, retrait ou par soudage, notamment soudage sous gaz protecteur, soudage aux électrons ou soudage par laser.

4. Composant de voie permanente selon au moins l'une des revendications précédentes,
**caractérisé en ce que**
le segment de tête (24, 30, 32) est en un acier très résistant ayant une teneur ≤ 0,03 % en poids de C, 18 % en poids de Ni, 5 % en poids de Mo, 10 % en poids de Co, et 1 % en poids de Ti.

5. Composant selon au moins l'une quelconque des revendications précédentes,
**caractérisé en ce que**
le segment de base (22, 28, 34) est un acier bainitique de composition suivante : environ 0,3-0,5 % en poids C, 1-1,5 % en poids Si, 0,5-1,5 % en poids Mn, environ 1 % en poids Cr, 0,7-1,2 % en poids Mo et le cas échéant avec des teneurs en V et Ni.

6. Composant selon au moins l'une quelconque des revendications précédentes,
**caractérisé en ce que**
le segment de base (22, 28, 34) présente, après un traitement thermique commun, une limite d'étirage R_{E1} de l'ordre de 950-1 100 N/mm² et/ou une résistance à la traction R_{M1} de l'ordre de 1 300-1 600 N/mm².

7. Composant selon au moins l'une quelconque des revendications précédentes,
**caractérisé en ce que**
le segment de tête (24, 30, 32) au départ est recuit en solution jusqu'à environ 900-1 050°C suivi d'un trempe pour obtenir de l'austénite, et présente une limite d'étirage R_{E2a} d'environ 800-900 N/mm² et/ou une résistance R_{M2A} de l'ordre de 1 000-1 200 N/mm².

8. Composant selon au moins l'une quelconque des revendications précédentes,
**caractérisé en ce que**
le segment de base (22, 28, 34), en acier bainitique, se présente au départ à l'état laminé et présente une limite d'étirage R_{EIA} d'environ 800-850 N/mm² et/ou une résistance à la traction R_{M1a} de l'ordre de 1 100-1 400 N/mm².

9. Procédé de fabrication d'un bloc de coeur par assemblage d'un segment de base en un premier acier avec un segment de tête en acier martensitique, très résistant ou extrêmement résistant, et qui après réunion sont soumis à un traitement thermique commun, comme premier acier on utilise un acier bainitique, allié, sous la forme d'un bloc bainitique constituant la zone avant du bloc de coeur, et qui se présente au départ à l'état laminé,
et le segment de tête en acier résistant ou très résistant est réalisé sous la forme d'un insert et est relié au bloc bainitique par soudage, frettage ou serrage et on soumet l'ensemble composé du bloc bainitique et de l'insert à un traitement thermique tel que l'acier bainitique présente une limite d'allongement R_{E1} tel que 950 < R_{E1} < 1 100 N/mm² et/ou une résistance à la traction R_{M1} telle que 1 400 < R_{M1} < 1 500 N/mm² et l'acier martensitique présente une limite d'allongement R_{E2} telle que 1 600 < R_{E2} < 1 800 N/mm² et une résistance à la traction R_{M2} telle que 1 800 < R_{M2} ≤ 2 200 N/mm².

10. Procédé selon la revendication 9,
**caractérisé en ce que**
le segment de tête est un acier martensitique qui est, à l'état de départ, recuit en fusion à une température comprise entre 900 et 1 000°C puis il est trempé à la température austénitique.

11. Procédé selon au moins l'une quelconque des revendications 9 ou 10,
**caractérisé en ce que**
le segment de base relié au segment de tête est recuit avec diffusion à une température de l'ordre de 400-600°C pendant une durée comprise entre 1 et 7 heures, de préférence entre 1 et 5 heures.
